# EUROPEAN PATENT SPECIFICATION

(11) **EP 0 251 605 B1**
(45) Date of publication and mention of the grant of the patent: **24.02.1993**
(21) Application number: 87305494.4
(22) Date of filing: 22.06.1987
(51) Int. Cl.: B29C 61/06, B29C 61/10

(54) **Wrap-around heat-recoverable article and method therefor**
Umhüllender, wärmerückstellbarer Gegenstand und Verfahren zu seiner Herstellung
Objet à reprise thermique enveloppant et procédé pour sa fabrication

(30) Priority: 23.06.1986 US 877620
(43) Date of publication of application: 07.01.1988
(73) Proprietor: RAYCHEM CORPORATION (a California corporation), Menlo Park California 94025 (US)
(72) Inventor: Hansen, Erling, Los Altos California 94022 (US); Wicht, Steve, Newark California 94560 (US)
(74) Representative: Dlugosz, Anthony Charles

(56) References cited:
- EP-A- 0 027 026
- DE-A- 2 344 129
- DE-A- 3 527 633
- GB-A- 928 752
- US-A- 2 629 953
- US-A- 2 929 161
- US-A- 3 483 285
- US-A- 4 191 405
- US-A- 4 349 404

## Description

This invention relates to heat recoverable articles and, more particularly, to heat recoverable articles suitable for use as wrap-around sleeves which can be easily and conveniently installed on cables, wire splices and the like for purpose of identification without the need for a free end of the cable or wire.

Heat recoverable articles have found widespread acceptance in employment as seals or other closures in the repair and protection of generally tubular conduits or as marking sleeves for wire identification. Typically, such articles have comprised heat shrinkable tubular sleeves which describe in cross section an integral, closed curve. Among the heat recoverable sleeves so configured are those produced according to Cook US patent 3,086,242 and Evans US Patent Nos. 3,894,731; 3,985,852 and 4,032,010, the disclosures of which are incorporated herein by reference.

Materials, both organic and metallic, capable of being rendered heat recoverable are well known. An article made of such materials can be deformed from an original, heat-stable configuration to a second, heat-unstable configuration. The article is said to be heat recoverable for the reason that, upon the application of heat alone, it can be caused to revert, or to attempt to revert, from its heat-unstable configuration to its original, heat-stable configuration.

For example DE-A-23 44 129 describes the re-forming of crosslinked plastics articles into a space-saving shape by squashing them and allowing them to cool. At a desired later point in time, the articles may be returned to their original shape by heating them to temperatures at which they become elastic again.

While tubular sleeves are generally satisfactory in many applications, they require the provision of a free end in the cable or wire to be identified over which the sleeve can be slipped. That manner of application is often manifestly inconvenient, notably in repair cases or otherwise where the identification has to be changed after the cable or wire has been already terminated.

There have been proposed various heat-recoverable wrap-around closures which for their application do not require a free end of the substrate to be installed, but they do require some mechanical joinder of the edges and thus would not be convenient for use as sleeve markers. There also have been proposed various tags that can be fastened onto wires by means of tie-wraps but, again, these are not very convenient to use in practice.

Actioncraft Products manufactures a split-sleeve laminated product which features an easy "snap-on" installation on wires already terminated. However, due to the method of manufacture of these markers, they are delivered pre-printed, which entails considerable delays every time cable or wire rerouting occurs since new markers need to be printed at some remote site. Of course, the same delays would be encountered should new markers of this type be required for any other purpose.

Wrap-around sleeves have also been proposed in Evans U.S. Patent Nos. 3,847,721 and 3,988,399 and Sovish et al. U.S. Patent No. 3,899,807, the disclosures of which are incorporated herein by reference. Evans discloses articles rendered involutely heat recoverable by differentially annealing a molecularly oriented unitary polymeric layer so as to provide an anisotropic gradient through the thickness thereof. Sovish et al. discloses articles rendered involutely heat recoverable by lamination of a first heat recoverable layer to a second, relatively non-heat recoverable layer which resists linear recovery of the first such that the laminated article curls upon recovery. It is believed that the Evans and Sovish et al. articles have not met with commercial success primarily due to the circumstance that it is difficult to control the final shape of the article.

Various others have proposed the profile extruding of materials for a variety of purposes. Among these are Brandeis U.S. Patent No. 208,363, Allen U.S. Patent No. 2,613,620, Ruck et al. U.S. Patent No. 2,952,037, Nevin et al U.S. Patent No. 3,461,499, Opfell U.S. Patent No. 3,558,420 and Behr U.S. Patent No. 3,848,035. However, none of these relate to wrap-around heat-recoverable sleeves.

It can thus be appreciated that the need for a heat recoverable wrap-around article which does not require for its application to a substrate the presentation of a free end thereof remains unfulfilled.

Accordingly, it is an object of the invention to provide an improved heat recoverable wrap-around article which does not require for its application to a substrate the presentation of a free end thereof.

It is a further object of the invention to provide an improved heat recoverable wrap-around article which is amenable to marking printed matter thereon at the time of use.

It is still another object of the invention to provide an improved heat recoverable wrap-around article which is convenient and easy to use.

These and other objects of the invention will become more apparent after reference to the following description considered in conjunction with the accompanying drawings.

One aspect of the invention provides a method of forming a heat recoverable wrap-around marker sleeve comprising:
profile extruding polymeric material into a predetermined shape;
irradiating the polymeric material;
opening out the polymeric material into a generally planar configuration; and
depositing printed matter on at least one principal surface of the generally planar polymeric material.

A further aspect of the invention provides a heat recoverable wraparound marker comprising a generally planar layer of polymeric material having opposed surfaces. The heat recoverable article is in the heat unstable condition with each of the principal surfaces having a latent recovery stress, the latent recovery stress on one principal surface being opposite in sense from the latent recovery stress on the other principal surface. The marker upon recovering towards a predetermined shape exhibits substantially no residual stress with respect to each of the principal surfaces. The marker also includes printed matter deposited on at least one principal surface and may include selectively placed perforations.

A final aspect of the invention relates to a heat recoverable wraparound marker produced by the method comprising profile extruding a layer of polymeric material into a predetermined shape, the layer having opposed principal surfaces, irradiating the polymeric material, and then opening out the polymeric material into a generally planar configuration. The article so deformed is in the heat unstable condition with each of the principal surfaces having a latent recovery stress, the latent recovery stress on one principal surface being opposite in sense from the latent recovery stress on the other principal surface. The method further comprises the step of depositing printed matter on at least one principal surface of the polymeric material, and may include the steps of recovering the article and/or selectively perforating the polymeric material.
Figure 1 is a block diagram illustrating the method according to the invention;
Figure 2 is a perspective view of a profile extrusion of polymeric material into a predetermined shape according to the invention;
Figure 3 is a perspective view of the polymeric material of Figure 2 which has now been deformed according to the invention.
Figure 4 is a cross-sectional view of another embodiment of the profile extrusion according to the invention.
Figure 5 is a perspective view of the polymeric material of Figure 3 after recovery.
Figures 6 and 7 are perspective views illustrating the article according to the invention in use.
Figure 8 is a perspective view of the profile extrusion of Figure 2 with a further layer of adhesive.
Figure 9 is an end view of a prior art article indicating the distribution of stresses therein.
Figure 10 is an end view of another prior art article indicating the distribution of stresses therein.
Figure 11 is an end view of the article according to the invention in the direction of arrow 11 in Figure 3 indicating the distribution of stresses therein.

According to the invention there is disclosed a method of forming a heat recoverable article comprising profile extruding polymeric material into a predetermined shape, irradiating the polymeric material and then deforming the polymeric material into a generally planar configuration. Subsequent steps of the method may comprise the depositing of printed matter on at least one principal surface of the generally planar polymeric material, heating the article so as to casue it to recover towards its predetermined shape, and/or selectively perforating the generally planar polymeric material.

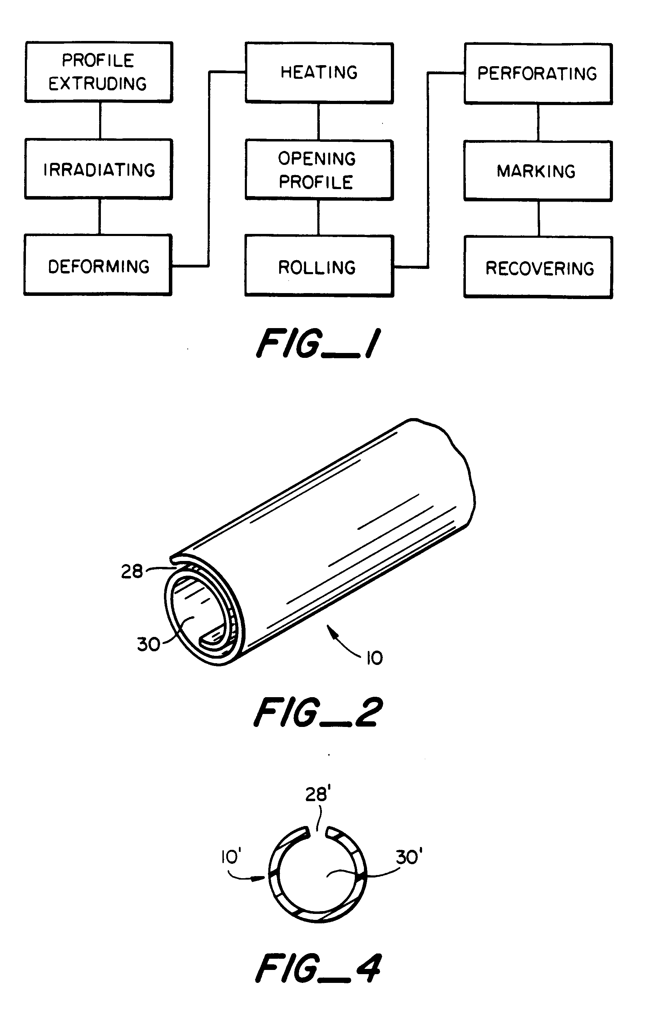

Referring to the figures in more detail and particularly referring at this time to Figure 1 there is shown a block diagram illustrating the method of the invention. Thus, the first step in the method according to the invention comprises profile extruding polymeric material into a predetermined shape. A preferred predetermined shape is illustrated in Figure 2 generally denoted as 10. As it can be seen this profile has an overlapping or coil-shaped configuration. The reason for the preferred overlapping or coil-shaped configuration will become apparent hereafter.

It is preferred that the profile extrusion consist essentially of a single layer of polymeric material. It is of course conceivable and contemplated within the scope of the invention that there may be times that a profile will be co-extruded such that there will be two or more layers of polymeric material. This, of course, is within the skill of one skilled in the art provided, of course, one has the appropriate extrusion equipment.

Alternatively, the predetermined shape may appear c-shaped as shown in Figure 4.

The next step in the method is irradiating the polymeric material with a suitable electron beam source so as to cause cross-linking of the material.

Continuing, the process further comprises deforming the polymeric material into a generally planar configuration. This deformation actually comprises at least three separate steps. The extruded material is first heated above its crystalline melting point, the profile is opened and then passed between opposed rolls so as to flatten it. Simultaneously with the step of rolling, the material is also cooled below its crystalline melting point. The material is now in the heat unstable condition. Figure 3 illustrates the profile 10 after flattening. It can be appreciated that when the material is flat as shown in Figure 3, the material can be easily coiled up for further handling or shipping.

In a subsequent step the polymeric material may be selectively perforated. These perforations may take at least two forms. The first type of perforation 12 may be a perforation that extends laterally across the planar layer of the material and the second form of perforation 14 may take the form of pin feed holes which extend longitudinally of the length of the planar material. The reasons for these perforations will become apparent shortly.

The method may further comprise the step of depositing printed matter 15 on at least one principal surface 16 of the generally planar polymeric material. As shown in Figure 3, the printed matter is deposited on the principal surface hidden from the viewer. Thus, the printed matter appears in phantom.

It can be appreciated by now that the article 10 shown in Figure 3 is actually a strip of markers. The printed matter 15 serves as the identifying indicia. The transverse perforations 12 allow for separation of individual markers 18, 20, 22, 24, etc. The longitudinal performations 14 (i.e., the pin feed holes) complement the tractor feed mechanism on a suitable printing apparatus, such as a dot matrix printer.

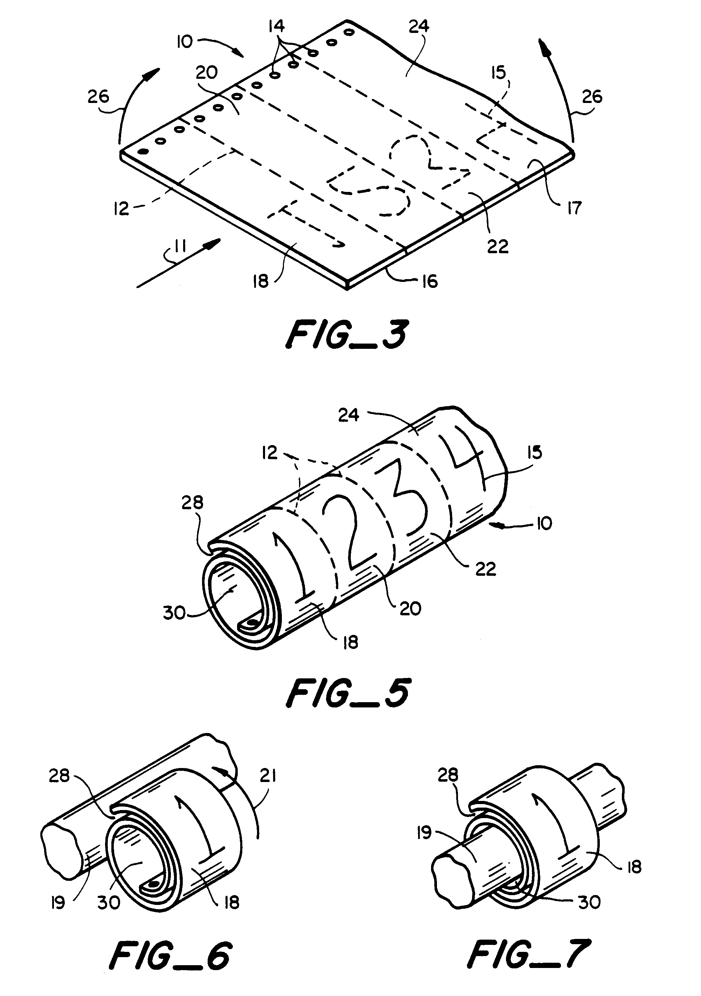

In a final step of the process, the strip of markers may be heated so as to cuase it to recover towards its predetermined shape. Referring again to Figure 3, the article will tend to recover in the direction of the arrows 26 towards the predetermined shape shown in Figure 2. The recovered strip of markers is illustrated in Figure 5.

Thus, the process according to the invention provides for the efficient and versatile production of a continuous strip of markers. After deformation, the flattened strip may be coiled up for storage or shipping. Instead of coiling up the strip, it may be directly fed into an apparatus for adding the perforations and then into a suitable printer, such as a dot matrix printer, for printing. At this point, the strip of markers may again be coiled up, or alternatively, the strip may be fed directly into a heating area, e.g. an oven, so as to cause recovery of the polymeric material.

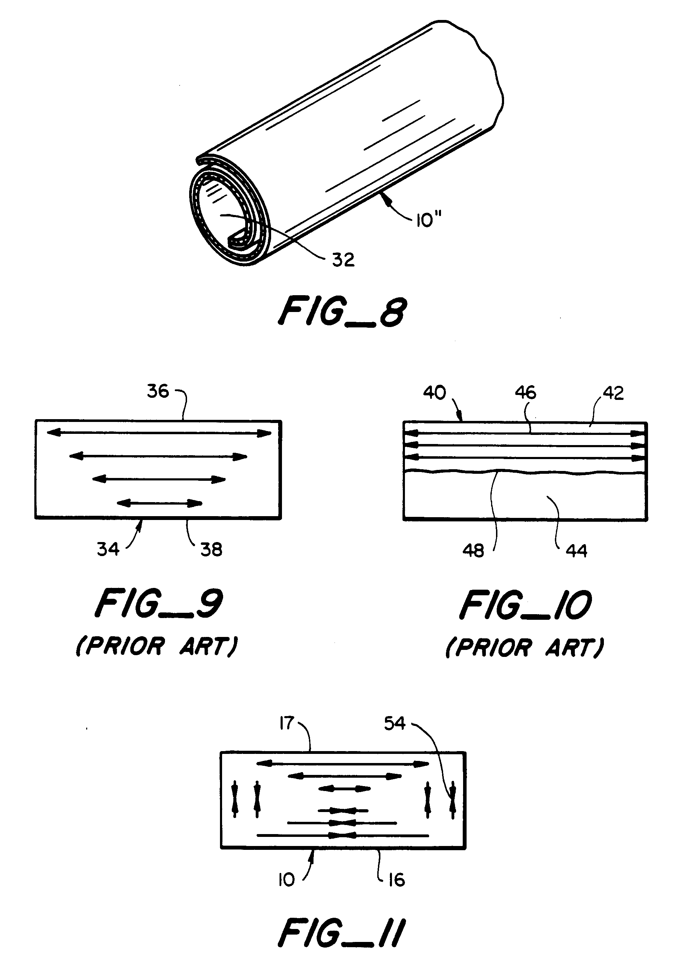

Referring now to Figures 6 and 7, in use, a recovered marker would be detached from the strip of markers. The marker, for example marker 18, would be placed generally parallel to a section of the wire 19 which is desired to be identified. The marker 18 would then be placed against the wire 19 with gap 28 receiving the wire. Gap 28 is sufficiently variable due to the springiness of the marker material so that a broad range of wire dimensions may be accommodated. The marker 18 would then be rotated in the direction of arrow 21 shown in Figure 6 with the marker spiraling around the wire until the wire lays within a cavity 30 as shown in Figure 7. The marker 18 is now fully installed.

An alternative method of using the article of the invention (not shown) would be to remove, for example, marker 18 from the strip of markers shown in Figure 3. The planar marker 18 would be placed adjacent to a wire and then heated to cause recovery of the marker. Upon recovering, the marker would curl around the wire so that the final result would be similar to that shown in Figure 7.

Should the embodiment of Figure 4 be utilized, the wire may simply be inserted through gap 28ʹ until the wire resides in cavity 30ʹ. Gap 28ʹ should, of course, be smaller than the outside diameter of the wire to be identified so as to avoid the marker falling off the wire. The fact that the gap 28ʹ is smaller than the outside diameter of the wire presents no problem since the marker has a certain amount of springiness which allows gap 28ʹ to expand somewhat.

The article could be made of a variety of thermoplastic materials that exhibit elastic memory properties after cross linking. Such thermoplastic materials may include polyethylenes, fluoropolymers, elastomers, etc. However, the selection of materials suitable for a product used as a marking sleeve must be made with the following considerations in mind. Firstly the material must be receptive enough to ink so that the printed product can withstand normal handling without smearing of the ink before the ink has been properly dried. Secondly the material once recovered and installed on a wire cable must be rigid enough to hold onto the wire without opening and falling off in time or when subjected to normal handling such as would occur where many wires can be bunched up together near terminal blocks. With these limitations in mind, it has been found that polyvinylidene fluoride works particularly well for use in the invention. However, it is also anticipated that other semi-rigid or rigid materials would work satisfactorily. Such materials may include by way of illustration and not of limitation copolymers of polyvinylidene fluoride, medium density polyethylene, high density polyethylene, copolymers of ethylene and tetrafluoroethylene, copolymers of ethylene and chlorotrifluoroethylene and semi-rigid polyvinylchloride. By semi-rigid it is meant a plastic that has a stiffness or apparent modulus of elasticity of between 10,000 and 100,000 psi (68.947.570 and 689.475.700 Pa). By rigid, it is meant a plastic that has a stiffness or apparent modulus of elasticity of greater than 100,000 psi.

An interesting and quite surprising aspect of Applicants' invention is that the ink when applied to the material has been found to be permanently deposited thereon after recovery of the polymeric material. By permanent it is meant that markers having printed matter deposited thereon would pass the tests as specified in Military Specification MIL-M-81531 and Military Standard MIL-STD-202F. These military requirements specify various tests for testing the permanence of ink on substrates. MIL-M-81531 specifies rubbing with an eraser a certain number of times. MIL-STD-202F, a more rigorous test, species immersion in a specified solvent and then brushing with a toothbrush. If a mark (i.e., the printed matter) were to pass these tests, it is considered to be permanently indicated thereon.

This result is quite surfprising since prior art methods of obtaining mark permanency have been unsuccessful or at least more cumbersome. One method of obtaining mark permanency is to apply a separate surface coating to the material which is very receptive to the ink. Another way of achieving mark permanency is by permatizing, a process commercialized by Raychem Corporation, the assignee of the instant application. While not wishing to be held to any particular theory, it is believed that mark permanency is due to a particular surface texture developed as a result of, for example, melt fracture during extrusion or alternatively later surface roughening imposed during the rolling of the markers. This development of a surface texture creates pores or nooks and crannies for ink to "hide" in which then become smaller after recovery, effectively preventing the ink from later being worn away by solvents or handling.

The surprising mark permanency discovered by the instant Applicants is not limited solely to the articles and markers disclosed herein but, instead, has broad application to other polymeric articles and markers where mark permanency may also be desirable.

Another embodiment of the invention is illustrated in Figure 8. In this embodiment, the extruded profile, generally indicated by 10ʺ, contains an inner layer of adhesive material 32. This adhesive material is most conveniently applied when the heat-recoverable article is in its flat position as shown in Figure 3. This method of applying the adhesive is preferable to it being co-extruded as would be the case if it were to be applied to the configuration shown in Figure 2. It is further preferred that the adhesive be a hot melt adhesive so it would flow at the recovery temperature of the underlying polymeric material.

At first glace Applicants' heat-recoverable article may appear similar to the heat-recoverable articles of the Evans and Sovish et al. patents discussed in the Background of the Invention. However, it is believed that Applicants' article is fundamentally different. In this regard reference to Figures 9 to 11 will be helpful. Figure 9 illustrates the stress distribution in an article 34 produced according to the method of Evans. The Evans article has been oriented so as to exhibit a frozen-in tensile recovery stress represented by arrows 36. However, one side 38 of the Evans article has been annealed so as to lessen or eliminate the frozen-in tensile recovery stress on that side. In this way, an anisotropic stress gradient has been formed. Figure 10 illustrates the stress distribution of an article 40 produced according to the method of Sovish et al. In this article, a frozen-in tensile recovery stress represented by arrows 46 has been applied to only one layer 42 of the article wherein a second, laminated layer 44 contains no such frozen-in tensile recovery stress. Thus at the interface 48 of the Sovish et al. article 40, there is a rapid change from essentially zero stress to substantially the maximum frozen-in tensile recovery stress. In the Evans article 34 the transition is less rapid but otherwise it is essentially the same as the Sovish et al. article. According to Applicants' article, shown in Figure 11, however, its flat dimensionally heat unstable configuration has one surface 17 that exhibits a maximum frozen-in tensile recovery stress while the opposite surface 16 exhibits a maximum frozen-in compressive recovery stress. Of course, the tensile and compressive stresses are developed as a result of the opening up and flattening of the profile extruded article. Now it is possible that in the course of flattening the extruded material a compressive stress 54 may be superimposed over the frozen-in recovery forces. However, this compressive stress will not drastically affect the distribution of the frozen-in recovery forces so that opposite surfaces will have tensile and compressive recovery forces, respectively.

It should be understood that the terms tensile recovery stress and compressive recovery stress have the following definitions. The term tensile recovery stress connotes that recovery stress that is exhibited by an article, that has been previously converted into its dimensionally heat unstable state by a substantially tensile deformation, when heated to its recovery temperature while constrained from recovering. The term compressive recovery stress connotes that recovery stress that is exhibited by an article, that has been previously converted into its dimensionally heat unstable state by a substantially compressive deformation, when heated to its recovery temperature while constrained from recovering.

Further disclosed according to the invention is a heat-recoverable article comprising a generally planar layer of polymeric material having opposed surfaces. The article is in the heat unstable condition with each of the principal surfaces having a latent recovery stress, the latent recovery stress on one principal surface being opposite in sense from the latent recovery stress on the other principal surface. The article upon recovering towards a predetermined shape exhibits substantially no residual stress with respect to each of the principal surfaces.

Referring to Figure 3, there is shown the heat-recoverable article according to the invention wherein the article comprises a generally planar layer of polymeric material having opposed surfaces 16, 17. The article is in the heat unstable condition. Referring to Figure 11, it can be seen that each of the principal surfaces 16, 17 has a latent recovery stress with the latent recovery stresses on opposite sides being opposite in sense. Opposite in sense means the latent recovery stress on one side is substantially compressive in nature while the latent recovery stress on the other side is substantially tensile in nature. The article upon recovering towards a predetermined shape as shown in Figure 5 exhibits substantially no residual stress with respect to each of the principal surfaces. Thus when the material is allowed to freely recover the stresses shown in Figure 11 would practically disappear as the material fully relaxes as a result of its recovery. The result is just the opposite with the prior art articles shown in Figures 9 and 10. These articles upon heating would tend to form an involute shape similar to Applicants' shape, however, there would be no relaxation of the stresses.

As further shown in Figure 3, the article may contain and usually will contain printed matter 15. As discussed earlier, the printed matter will usually be permanently deposited thereon.

So as to provide separability for the individual articles, selectively placed perforations 12 are provided for this purpose.

Finally, there is disclosed according to the invention a heat-recoverable article produced by the method comprising profile extruding a layer of polymeric material into a predetermined shape, the layer having opposed principal surfaces, irradiating the polymeric material and then deforming the polymeric material into a generally planar configuration. The article is in the heat unstable condition with each of the principal surfaces having a latent recovery stress, the latent recovery stress on one principal surface being opposite in sense from the latent recovery stress on the other principal surface.

As is apparent, the heat-recoverable article produced by the method conforms generally to the article described previously which was produced by the method of Figure 1.

The article produced by the method may comprise the subsequent steps of depositing printed matter on at least one principal surface of the polymeric material and then heating the article so as to cause it to recover towards its predetermined shape. The article upon recovery towards its predetermined shape would then exhibit substantially no residual stress with respect to each of the principal surfaces. Finally, the article produced by the method may also comprise a subsequent step of selectively perforating the generally planar polymeric material so as to provide means for separating individual markers.

## Claims

1. A method of forming a heat recoverable wrap-around marker sleeve comprising:
profile extruding polymeric material into a predetermined shape;
irradiating the polymeric material;
opening out the polymeric material into a generally planar configuration; and
depositing printed matter on at least one principal surface of the generally planar polymeric material.

2. The method of claim 1 further comprising the subsequent step of heating the article so as to cause it to recover towards its predetermined shape.

3. The method of claim 1 further comprising the subsequent step of selectively perforating the generally planar polymeric material.

4. The method of claim 1 wherein the polymeric material consists essentially of a single layer of polymeric material.

5. The method of claim 1 further comprising the subsequent step of applying a layer of adhesive.

6. The method of claim 1 wherein the predetermined shape appears coiled-shaped when viewed in cross-section.

7. The method of claim 1 wherein the predetermined shape appears C-shaped when viewed in cross-section.

8. A heat recoverable wraparound marker comprising a generally planar layer of polymeric material having opposed surfaces,
wherein said marker is in the heat unstable condition with each of the principal surfaces having a latent recovery stress, the latent recovery stress on one principal surface being opposite in sense from the latent recovery stress on the other principal surface;
wherein said marker upon recovery towards a predetermined shape exhibits substantially no residual stress with respect to each of the principal surfaces; and
wherein the marker includes printed matter deposited on at least one principal surface.

9. The marker of claim 8 wherein said printed matter is permanently deposited.

10. The marker of claim 8 wherein said polymeric layer of material is selected from the group of materials consisting of polyvinylidene fluoride, copolymers of polyvinylidene fluoride, medium density polyethylene, high density polyethylene, copolymers of ethylene and tetrafluoroethylene, copolymers of ethylene and chlorotrifluoroethylene and semi-rigid polyvinylchloride.

11. The marker of claim 8 wherein said generally planar layer of polymeric material consists essentially of a single layer of polymeric material.

12. The marker of claim 8 further comprising selectively-placed perforations.

13. The marker of claim 8 further comprising a layer of adhesive.

14. A heat-recoverable wraparound marker produced by the method comprising:
profile extruding a layer of polymeric material into a predetermined shape, the layer having opposed principal surfaces;
irradiating the polymeric material;
opening out the polymeric material into a generally planar configuration wherein the marker being in the heat unstable condition with each of the principal surfaces having a latent recovery stress, the latent recovery stress on one principal surface being opposite in sense from the latent recovery stress on the principal surface; and
depositing printed matter on at least one principal surface of the generally planar polymeric material.

15. The marker of claim 14, further comprising the subsequent step of heating said article so as to cause it to recover towards its predetermined shape wherein said article upon recovering towards its predetermined shape exhibits substantially no residual stress with respect to each of the principal surfaces.

16. The marker of claim 14, wherein the polymeric material consists essentially of a single layer of polymeric material.

17. The marker of claim 14, further comprising the subsequent step of applying a layer of adhesive.

18. The marker of claim 14, wherein said printed matter is permanently deposited.

19. The marker of claim 14 wherein said polymeric layer of material is selected from the group of materials consisting of polyvinylidene fluoride, copolymers of polyvinylidene fluoride, medium density polyethylene, high density polyethylene, copolymers of ethylene and tetrafluoroethylene, copolymers of ethylene and chlorotrifluoroethylene and semi-rigid polyvinylchloride.

20. The marker of claim 14 further comprising the subsequent step of selectively perforating the generally planar polymeric material.

21. The marker of claim 14, wherein the predetermined shape appears coil-shaped when viewed in cross-section.

22. The marker of claim 14, wherein the predetermined shape appears C-shaped when viewed in cross-section.

## Patentansprüche

1. Verfahren zur Bildung einer wärmerückstellbaren Umwickel-Markierungshülle, das folgende Schritte aufweist:
- Profilextrudieren von polymerem Material in einer vorbestimmten Gestalt;
- Bestrahlen des polymeren Materials;
- Öffnen des polymeren Materials in eine im allgemeinen plane Konfiguration; und
- Aufbringen eines Aufdrucks auf wenigstens einer Hauptfläche des im allgemeinen planen polymeren Materials.

2. Verfahren nach Anspruch 1, das ferner den anschließenden Schritt des Erwärmens des Gegenstands aufweist, um zu bewirken, daß dieser sich in seine vorbestimmte Gestalt rückstellt.

3. Verfahren nach Anspruch 1, das ferner den anschließenden Schritt des selektiven Perforierens des im allgemeinen planen polymeren Materials aufweist.

4. Verfahren nach Anspruch 1, wobei das polymere Material im wesentlichen aus einer einzigen Schicht aus polymerem Material besteht.

5. Verfahren nach Anspruch 1, das ferner den anschließenden Schritt des Aufbringens einer Klebstoffschicht aufweist.

6. Verfahren nach Anspruch 1, wobei die vorbestimmte Gestalt, im Querschnitt gesehen, wickelförmig erscheint.

7. Verfahren nach Anspruch 1, wobei die vorbestimmte Gestalt, im Querschnitt gesehen, C-förmig erscheint.

8. Wärmerückstellbarer Umwickel-Markierer, der eine im allgemeinen plane Schicht aus polymerem Material mit gegenüberliegenden Oberflächen aufweist,
- wobei der Markierer im wärmeinstabilen Zustand ist und jede der Hauptflächen eine latente Rückstellspannung hat, wobei die latente Rückstellspannung an der einen Hauptfläche der latenten Rückstellspannung an der anderen Hauptfläche richtungsmäßig entgegengesetzt ist;
- wobei der Markierer bei Rückstellung in seine vorbestimmte Gestalt im wesentlichen keine Restspannung in bezug auf jede der Hauptflächen zeigt; und
- wobei der Markierer Aufgedrucktes aufweist, das auf wenigstens einer Hauptfläche aufgebracht ist.

9. Markierer nach Anspruch 8, wobei das Aufgedruckte permanent aufgebracht ist.

10. Markierer nach Anspruch 8, wobei die polymere Materialschicht aus der Gruppe von Materialien ausgewählt ist, die aus Polyvinylidenfluorid, Copolymeren von Polyvinylidenfluorid, Polyethylen mittlerer Dichte, Polyethylen hoher Dichte, Copolymeren von Ethylen und Tetrafluorethylen, Copolymeren von Ethylen und Chlortrifluorethylen und halbhartem Polyvinylchlorid besteht.

11. Markierer nach Anspruch 8, wobei die im allgemeinen plane Schicht aus polymerem Material im wesentlichen aus einer einzigen Schicht aus polymerem Material besteht.

12. Markierer nach Anspruch 8, der ferner selektiv angebrachte Perforationen aufweist.

13. Markierer nach Anspruch 8, der ferner eine Klebstoffschicht aufweist.

14. Wärmerückstellbarer Umwickel-Markierer, der durch das Verfahren hergestellt ist, das folgende Schritte aufweist:
- Profilextrudieren einer Schicht aus polymerem Material in einer vorbestimmten Gestalt, wobei die Schicht gegenüberliegende Hauptflächen hat;
- Bestrahlen des polymeren Materials;
- Öffnen des polymeren Materials in eine im allgemeinen plane Konfiguration, wobei der Markierer im wärmeinstabilen Zustand ist und jede der Hauptflächen eine latente Rückstellspannung hat, wobei die latente Rückstellspannung an der einen Hauptfläche der latenten Rückstellspannung an der anderen Hauptfläche richtungsmäßig entgegengesetzt ist; und
- Aufbringen eines Aufdrucks auf wenigstens einer Hauptfläche des im allgemeinen planen polymeren Materials.

15. Markierer nach Anspruch 14, der ferner den anschließenden Schritt des Erwärmens des Gegenstands aufweist, um zu bewirken, daß dieser sich in seine vorbestimmte Gestalt rückstellt, wobei der Gegenstand bei Rückstellung in seine vorbestimmte Gestalt im wesentlichen keine Restspannung in bezug auf jede der Hauptflächen zeigt.

16. Markierer nach Anspruch 14, wobei das polymere Material im wesentlichen aus einer einzigen Schicht aus polymerem Material besteht.

17. Markierer nach Anspruch 14, der ferner den anschließenden Schritt des Aufbringens einer Klebstoffschicht aufweist.

18. Markierer nach Anspruch 14, wobei der Aufdruck permanent aufgebracht ist.

19. Markierer nach Anspruch 14, wobei die polymere Materialschicht aus der Gruppe von Materialien ausgewählt ist, die aus Polyvinylidenfluorid, Copolymeren von Polyvinylidenfluorid, Polyethylen mittlerer Dichte, Polyethylen hoher Dichte, Copolymeren von Ethylen und Tetrafluorethylen, Copolymeren von Ethylen und Chlortrifluorethylen und halbhartem Polyvinylchlorid besteht.

20. Markierer nach Anspruch 14, der ferner den anschließenden Schritt des selektiven Perforierens des im allgemeinen planen polymeren Materials aufweist.

21. Markierer nach Anspruch 14, wobei die vorbestimmte Gestalt, im Querschnitt gesehen, wickelförmig erscheint.

22. Markierer nach Anspruch 14, wobei die vorbestimmte Gestalt, im Querschnitt gesehen, C-förmig erscheint.

## Revendications

1. Procédé de formation d'un manchon enroulé de marquage, doué de reprise dimensionnelle à chaud, consistant :
à extruder avec profilage une matière polymérique sous une forme prédéterminée ;
à irradier la matière polymérique ;
à ouvrir la matière polymérique sous une configuration généralement plane ; et
à déposer un motif imprimé sur au moins une surface principale de la matière polymérique généralement plane.

2. Procédé suivant la revendication 1, comprenant en outre l'étape ultérieure de chauffage de l'article de manière à provoquer la reprise dimensionnelle de cet article vers sa forme prédéterminée.

3. Procédé suivant la revendication 1, comprenant en outre l'étape ultérieure consistant à perforer sélectivement la matière polymérique généralement plane.

4. Procédé suivant la revendication 1, dans lequel la matière polymérique consiste essentiellement en une seule couche de matière polymérique.

5. Procédé suivant la revendication 1, comprenant en outre l'étape ultérieure d'application d'une couche d'un adhésif.

6. Procédé suivant la revendication 1, dans lequel la forme prédéterminée présente l'aspect d'un enroulement lorsqu'elle est examinée en section transversale.

7. Procédé suivant la revendication 1, dans lequel la forme prédéterminée présente l'aspect d'un C lorsqu'elle est examinée en section transversale.

8. Elément enroulé de marquage, doué de reprise dimensionnelle à chaud, comprenant une couche généralement plane de matière polymérique ayant des surfaces opposées, ledit élément de marquage étant à l'état instable à chaud avec chacune des surfaces principales présentant une tension latente de reprise dimensionnelle, le sens de la tension latente de reprise dimensionnelle sur une surface principale étant opposé à celui de la tension latente de reprise dimensionnelle sur l'autre surface principale ;
ledit élément de marquage, par reprise dimensionnelle vers une forme prédéterminée, ne présentant pratiquement aucune tension résiduelle en ce qui concerne chacune des surfaces principales ; et
l'élément de marquage comprenant un motif imprimé déposé sur au moins une surface principale.

9. Elément de marquage suivant la revendication 8, dans lequel le motif imprimé est déposé de manière permanente.

10. Elément de marquage suivant la revendication 8, dans lequel la couche polymérique de matière est choisie dans le groupe de matières comprenant un polymère de fluorure de vinylidène, des copolymères de poly-(fluorure de vinylidène), un polyéthylène moyenne densité, un polyéthylène haute densité, des copolymères d'éthylène et de tétrafluoréthylène, des copolymères d'éthylène et de chlorotrifluoréthylène ainsi qu'un polymère de chlorure de vinyle semi-rigide.

11. Elément de marquage suivant la revendication 8, dans lequel la couche généralement plane de matière polymérique consiste essentiellement en une seule couche de matière polymérique.

12. Elément de marquage suivant la revendication 8, comprenant en outre des perforations placées de manière sélective.

13. Elément de marquage suivant la revendication 8, comprenant en outre une couche d'un adhésif.

14. Elément enroulé de marquage, doué de reprise dimensionnelle à chaud, produit par le procédé consistant :
à extruder avec profilage une couche de matière polymérique sous une forme prédéterminée, ladite couche ayant des surfaces principales opposées ;
à irradier la matière polymérique ;
à ouvrir la matière polymérique sous une configuration généralement plane, ledit élément de marquage étant à l'état instable à chaud avec chacune des surfaces principales présentant une tension latente de reprise dimensionnelle, le sens de la tension latente de reprise dimensionnelle sur une surface principale étant opposé à celui de la tension latente de reprise dimensionnelle sur l'autre surface principale ; et
à déposer un motif imprimé sur au moins une surface principale de la matière polymérique généralement plane.

15. Elément de marquage suivant la revendication 14, comprenant en outre l'étape ultérieure consistant à chauffer l'article de manière à provoquer sa reprise dimensionnelle vers sa forme prédéterminée, l'article, par reprise dimensionnelle vers sa forme prédéterminée, ne présentant pratiquement aucune tension résiduelle en ce qui concerne chacune des surfaces principales.

16. Elément de marquage suivant la revendication 14, dans lequel la matière polymérique consiste essentiellement en une seule couche de matière polymérique.

17. Elément de marquage suivant la revendication 14, comprenant en outre l'étape ultérieure consistant à appliquer une couche d'un adhésif.

18. Elément de marquage suivant la revendication 14, dans lequel le motif imprimé est déposé de manière permanente.

19. Elément de marquage suivant la revendication 14, dans lequel la couche polymérique de matière est choisie dans le groupe de matières comprenant un polymère de fluorure de vinylidène, des copolymères de poly-(fluorure de vinylidène), un polyéthylène moyenne densité, un polyéthylène haute densité, des copolymères d'éthylène et de tétrafluoréthylène, des copolymères d'éthylène et de chlorotrifluoréthylène ainsi qu'un polymère de chlorure de vinyle semi-rigide.

20. Elément de marquage suivant la revendication 14, comprenant en outre l'étape ultérieure consistant à perforer sélectivement la matière polymérique généralement plane.

21. Elément de marquage suivant la revendication 14, dans lequel la forme prédéterminée présente l'aspect d'un enroulement lorsqu'elle est examinée en section transversale.

22. Elément de marquage suivant la revendication 14, dans lequel la forme prédéterminée présente l'aspect d'un C lorsqu'elle est examinée en section transversale.
